# EUROPEAN PATENT APPLICATION

(11) **EP 2 620 897 A1**
(43) Date of publication of application: **31.07.2013**
(21) Application number: 11826318.5
(22) Date of filing: 16.02.2011
(51) Int. Cl.: G06K 15/00

(54) **METHOD, DEVICE AND SYSTEM FOR DISPLAYING RADIO FREQUENCY IDENTIFICATION APPLICATION INFORMATION**

(30) Priority: 21.09.2010 CN 201010298209
(71) Applicant: ZTE Corporation, Shenzhen, Guangdong 518057 (CN)
(72) Inventor: LIANG, Guohe, Shenzhen Guangdong 518057 (CN)
(74) Representative: Bongiovanni, Simone
(86) International application number: PCT/CN2011/071016
(87) International publication number: WO 2012/037791

(57) **Abstract**

A method, a device and a system for displaying radio frequency identification application information are provided. The method includes: a Secure Digital Memory Card (SD card) running a Radio Frequency Identification (RFID) application to generate RFID application information, wherein the RFID application includes a RFID service program and a display application (S102); the SD card uploading the RFID application information to a terminal (S104); the terminal displaying the RFID application information according to the mode of communication with the SD card (S106). Based on the technical solution, the RFID application display is realized in the SD card, and the terminal can display the RFID application information in the SD card according to different communication modes of the SD card, thereby the problem that the RFID application running on the SD card cannot be displayed is solved and the application scope of the SD card is enlarged.

## Description

### Field of the Invention

The present invention relates to the communication field, and in particular, to a method, an apparatus and a system for displaying Radio Frequency Identification (RFID) application information.

### Background of the Invention

The Secure Digital Memory Card (SD card) is a memory card based on semiconductor flash memory technology. The SD card is widely applied to portable devices, such as digital camera, Personal Digital Assistant (PDA) and multimedia player. The SD card is originally developed based on the Multimedia Card (MMC card) and is compatible with the MMC card, but the data transfer rate of the SD card is higher. In addition, the SD card has an additional function of Content Protection for Recordable Media (CPRM) which is used for authorized access of data in the card, so as to realize content protection.

With the development of memory technology of the SD card, Mini SD card and Micro SD card gradually emerge. The emergence of small-sized SD card greatly enlarges the application scope of the SD card, and makes application of the SD card to some small-sized terminals possible. On the other hand, functions of the Mini SD card and the Micro SD card are compatible with that of the SD card, so they can be used as the standard SD card by only inserting them in a specific adapter card. Thus, the Mini SD card and the Micro SD card can be used for those digital devices using the standard SD card, which accelerates market penetration of the Mini SD card and the Micro SD card.

At present, the SD cards comprise Mini SD card, TransFlash (Micro SD) card, Micro SD card, Secure Digital Input and Output Card (SDIO card) and so on, and all these cards are referred as SD card.

There are six RFID frequencies, which are 125KHz, 13.56MHz, 43.3-92MHz, 860-930MHz (i.e. Ultra High Frequency (UHF)), 2.45GHz and 5.8GHz, respectively. Two frequency bands are mostly adopted by RFID, one of which is 2.4G technology, for example, the RF-SIM technology, which can realize mid-ranged and short-ranged wireless communication, the other of which is 13.56MHz technology, i.e. the Near Field Communication (NFC) technology which is currently widely supported by organizations like bank, financial institution and so on. The NFC technology is evolved from the mergence of contact-less RFID technology and internetworking technology, and also belongs to the RFID technology. The operating modes of the RFID technology comprise point-to-point mode, reader mode and card simulation mode.

The RFID technology is mainly applied to the fields of logistics and supply management, manufacture and assembly, airport baggage handling, mail/express parcel handling, document tracking/library management, animal identification, access control/electronic ticket, automatic road charging and so on.

At present, the SD card is usually used as an external secure chip of the RFID terminal for realizing security function. Being different from the Subscriber Identity Module (SIM) card, the SD card is not controlled by telecom operators, so it is widely applied to the industries, such as bank and public transport. However, at present, the display of RFID application information can be completed only by running an application on the terminal. Because the applications are different with the different terminal platform, operating system and terminal manufacture, the display of RFID application information in the SD card on the terminal is limited, which is not convenient for users to use the SD card.

### Summary of the Invention

The invention provides a method, apparatus (comprising terminal and SD card) and a system for displaying the RFID application information, so as to solve the problem that the RFID application information running on the SD card cannot be displayed.

According to one aspect of the present invention, a method for displaying RFID application information is provided, which comprises: an SD card running a RFID application to generate RFID application information, wherein the RFID application comprises: a RFID service program and a display application; the SD card uploading the RFID application information to a terminal; and the terminal displaying the RFID application information according to the mode of communication with the SD card.

When the mode of communication adopted between the terminal and the SD card is based on SIM Tool Kit (STK) technology, the terminal displaying the RFID application information according to the mode of communication with the SD card comprises: the terminal displaying the RFID application information in a display mode supported by the STK.

When the mode of communication adopted between the terminal and the SD card is based on Web server, the terminal displaying the RFID application information according to the communication mode with the SD card comprises: the terminal displaying the RFID application information in a display mode of Web browser.

The condition of triggering the running of the RFID application on the SD card comprises: the SD card receiving a request sent from the terminal for obtaining the RFID application information, wherein the request is sent according to the mode of Hyper Text Transfer Protocol (HTTP) protocol.

The terminal displaying the RFID application information in the display mode of Web browser comprises: setting the address of the Web browser as a local host, and setting the port is set as a designated port when the terminal displays the RFID application information.

The SD card uploading the RFID application information to the terminal comprises: the SD card uploading RFID application information generated by the RFID service program to the terminal through a designated physical channel; and the SD card uploading the RFID application information generated by the RFID display application to the terminal through a common transmission interface.

According to another aspect of the present invention, a system for displaying RFID application information is provided, which comprises: a terminal and an SD card; the SD card comprises: an application processing module, which is configured to run a RFID application to generate RFID application information, wherein the RFID application comprises a RFID service program and a display application; and an information output module, which is configured to upload the RFID application information to the terminal; the terminal comprises: a display control module, which is configured to display the RFID application information according to the mode of communication with the SD card.

The display control module comprises: a first display unit, which is configured to display the RFID application information in a display mode supported by STK, when the mode of communication with the SD card is based on the STK technology.

The display control module comprises: a second display unit, which is configured to display the RFID application information in a display mode of Web browser, when the mode of communication with the SD card is based on Web server.

The terminal further comprises: a request sending module, which is configured to send a request for obtaining the RFID application information to the SD card according to the mode of HTTP protocol; and the application processing module comprises: a triggering unit, which is configured to trigger running of its own RFID application after receiving the request sent from the terminal.

The information output module comprises: a first information output unit, which is configured to upload the RFID application information generated by the RFID service program to the terminal through a designated physical channel; and a second information output unit, which is configured to upload the RFID application information generated by the RFID display application to the terminal through a common transmission interface.

According to still another aspect of the present invention, a terminal is provided, which comprises: an information receiving module, which is configured to receive RFID application information sent from an SD card; a display control module, which is configured to display the RFID application information according to the mode of communication with the SD card.

The display control module comprises: a first mode determining unit, which is configured to determine the mode of communication with the SD card is based on STK technology; and a first display unit, which is configured to display the RFID application information in a display mode supported by STK according to the determining result of the first mode determining unit.

The display control module comprises: a second mode determining unit, which is configured to determine the mode of communication with the SD card is based on Web server; and a second display unit, which is configured to display the RFID application information in a display mode of Web browser according to the determining result of the second mode determining unit.

The terminal further comprises a request sending module, which is configured to send a request for obtaining the RFID application information to the SD card according to the mode of HTTP protocol, so as to trigger the SD card to run the RFID application, wherein the RFID application comprises: a RFID service program and a display application.

The terminal is one of a mobile terminal, a portable computer or a Personal Digital Assistant (PDA).

According to another aspect of the present invention, an SD card is provided, which comprises: an application process module, which is configured to run a RFID application to generate RFID application information, wherein the RFID application comprises a RFID service program and a display application; and an information output module, which is configured to upload the RFID application information obtained by the application processing module to a terminal.

The information output module comprises: a first information output unit, which is configured to upload the RFID application information generated by the RFID service program to the terminal through a designated physical channel; and a second information output unit, which is configured to upload the RFID application information generated by the RFID display application to the terminal through a common transmission interface.

By virtue of the present invention, the terminal displays the RFID application information on the SD card according to the access mode of the SD card by adding the RFID application in the SD card, thereby solving the problem that the RFID application information running on the SD card cannot be displayed, which will enlarge the application scope of the SD card.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a flowchart of a method for displaying RFID application information according to an embodiment of the present invention;
Fig. 2 is a schematic diagram of connection mode adopted between the terminal and the SD card according to an embodiment of the present invention;
Fig. 3 is a schematic diagram of connection mode adopted between the terminal and the SD card according to embodiment 1 of the present invention;
Fig. 4 is a flowchart of a method for displaying RFID application information based on Fig. 3 according to an embodiment of the present invention;
Fig. 5 is a schematic diagram of connection mode adopted between the terminal and the SD card according to embodiment 2 of the present invention;
Fig. 6 is a flowchart of a method for displaying RFID application information based on Fig. 5 according to an embodiment of the present invention;
Fig. 7 is a schematic diagram of connection mode adopted between the terminal and the SD card according to embodiment 3 of the present invention;
Fig. 8 is a structural block diagram of a system for displaying RFID application information according to an embodiment of the present invention;
Fig. 9 is a structural block diagram of a terminal according to an embodiment of the invention;
Fig. 10 is a structural block diagram of an SD card according to an embodiment of the present invention; and
Fig. 11 is a specific structural block diagram of an SD card according to an embodiment of the present invention.

### Detailed Description of the Embodiments

The present invention will be described in details with reference to the accompanying drawings and in conjunction with the embodiments hereinafter. It should be noted that, the embodiments of this application and the features in the embodiments can be combined with each other if there is no conflict.

In an embodiment of the present invention, a display application is set in the SD card, and the display resource of the terminal is called to display the RFID application information on the SD card, wherein the terminal only serves as a display. Therefore, the embodiment of the present invention provides a method, apparatus (comprising a terminal and an SD card) and a system for displaying the RFID application information.

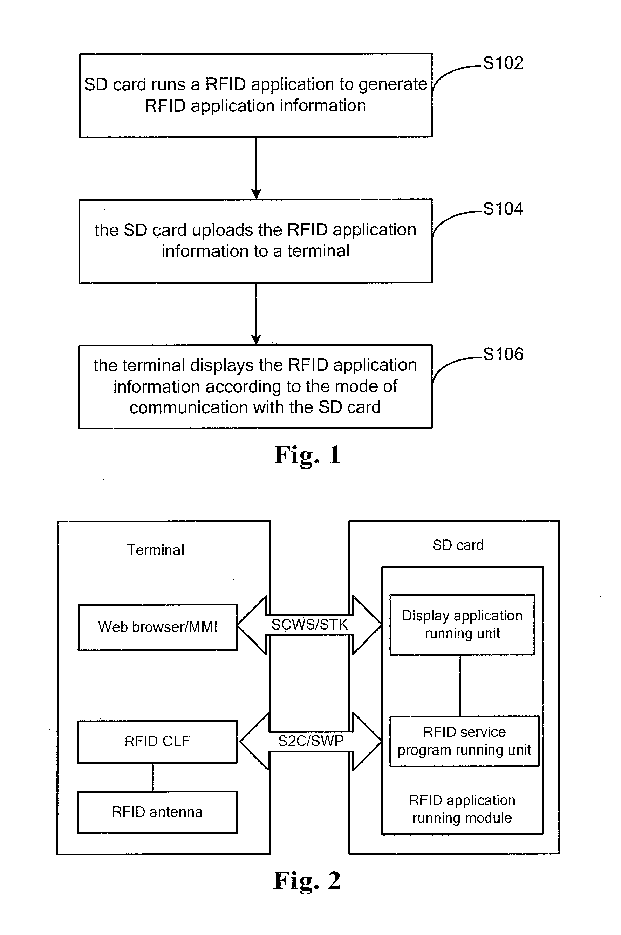

Fig. 1 shows a flowchart of a method for displaying RFID application information according to an embodiment of the present invention, wherein the method comprises the following steps.

Step S102: an SD card running a RFID application to generate RFID application information, wherein the RFID application comprises a RFID service program and a display application.

The RFID application of the present embodiment runs on the SD card, and at least comprises a RFID service program and a display application; the RFID service program indicates the application completing specific RFID functions, for example, the application of transaction by card in the mobile payment; and the display application indicates providing value-added services based on the RFID application aiming at the display ability of the terminal, for example, display of transaction record.

Step S104: the SD card uploading the RFID application information to the terminal.

For enhancing the security of the system, when specifically implementing the step, the RFID information generated by the RFID service program and the display application may be transmitted in two routes. For example, the SD card uploads the RFID application information generated by the RFID service program to the terminal through a designated physical channel (e.g. the interface such as Wireless Session Protocol (WSP)); the SD card uploads the RFID application information generated by the RFID display application to the terminal through a common transmission interface.

Step S106: the terminal displaying the RFID application information according to the mode of communication with the SD card.

There are at least two modes of data exchange between the SD card and the terminal in the embodiment of the present invention. One mode is communication based on the STK technology, wherein the STK is a technology aiming at the SIM in related technology. In the embodiment of the present invention, the STK technology is applied to the SD card, representing the technology similar to the SIM. Another mode is communication based on Web server. The former is called the STK technology, and the latter is called the Smart Card Web Server (SCWS) technology. According to the two communication modes, the terminal adopts two different modes to display the RFID application information. For example, when the communication mode adopted between the terminal and the SD card is based on the STK technology, the terminal displays the RFID application information in the display mode supported by the STK; when the communication mode adopted between the terminal and the SD card is based on the Web server, the terminal displays the RFID application information in the display mode of Web browser (e.g. SCWS).

When the terminal supports the STK mode, the STK includes a group of instructions for the interaction between the terminal and the SD card, which enables the RFID application in the SD card to run to display, so as to realize specified value-added services. The terminal calls the Man Machine Interface (MMI) through the STK to complete the corresponding display and interaction. The MMI is an interface between the user performing the mobile communication and the terminal providing the mobile communication service, which comprises hardware and software.

When the terminal supports the SCWS mode, a local connection is established between the Web browser on the terminal and the Web server running on the SD card in the SCWS mode. The Web server is embedded in the SD card, and the application of the terminal can access resources and services on the SD card through the Hyper Text Transfer Protocol (HTTP) protocol. Due to using the HTTP protocol to exchange data, the Web browser can be used as a user interface of the application.

For the first communication mode, when the user selects STK menu, the display application on the SD card is run to communicate with the terminal through the ISO7816 interface.

For the second communication mode, i.e., accessing in the mode of the Web server, the condition of triggering the running of the RFID application can be that: the SD card receives a request sent from the terminal for obtaining the RFID application information, wherein the request is sent by the terminal according to the mode of HTTP protocol.

When the SD card is connected with the terminal in the mode of the Web server, for ensuring that the terminal is able to access the SD card, the terminal can set the address of the SD card as local host, and set the port of the SD card as designated port. Thus, when the terminal displays the RFID application information, the address of the Web browser is set as the local host, and the port is set as the designated port. That is to say, the terminal can access the SD card in the mode of surfing the Internet, only by inputting the local host and the designated port on the browser interface of the terminal, to complete the display of the RFID application information on the SD card.

In the second mode, the terminal displays the RFID application information in the form of webpage, so it is required to support the Web browser, the HTTP protocol, the TCP/IP protocol, the Bearer Independent Protocol (BIP) protocol and so on.

Referring to the schematic diagram of connection mode adopted between the terminal and the SD card shown in Fig. 2, the terminal in the diagram has the RFID function, and comprises RFID CLF (analogue front-end chip), RFID antenna, secure chip and so on. The secure chip can be realized by adopting either the RFID CLF internal secure chip, or the SIM card or SD card. Moreover, the terminal further comprises the Web browser/ MMI which is used for displaying the RFID application information transmitted from the SD card.

In an embodiment of the present invention, the RFID application runs on the SD card, so the SD card comprises a RFID application running module which is used for running the RFID application. The RFID application running module further comprises a RFID service program running unit which is used for running the RFID service program, and a display application running unit which is used for running the RFID display application. The RFID service program indicates application completing specific RFID functions, for example, the application of transaction by card in the mobile payment. The display application indicates providing value-added services based on the RFID application according to the display ability of the terminal, for example, display of transaction record.

For ensuring the security of the RFID service, the RFID CLF communicates with the RFID service through a special physical interface. The special physical interface can be either a standard protocol interface, e.g. Single Wire Protocol (SWP), or a private communication interface, e.g. Sigln-SigOut-Connection (S2C). The information generated by the RFID service program can be transmitted to the RFID CLF of the terminal through the interface supporting the S2C/SWP protocol on the terminal; the information generated by the display application can be realized through the SCWS/STK technology and the like. The display application sends the display and interaction request (in the mode of the SCWS/STK) to the terminal, then the terminal calls, according to the request from the SD card, related resource (i.e. the Web browser/MMI) to complete the display and interaction of the RFID application.

The above-mentioned RFID CLF and RFID antenna can be integrated either on the terminal (e.g. the 13.56 NFC solution), or on the SD card (e.g. the 2.4G RFSIM solution).

Furthermore, it is needed to add an application at terminal side to assist in the completion of the RFID service. The application at the terminal side in an embodiment of the present invention interacts with the RFID CLF through a protocol stack and an adaptation layer. In the above, the application at the terminal side mainly comprises the following functions:
1) card simulation operating mode, where the SD card has a secure encryption/decryption function, can exchange related information with the terminal, and can display related information in this mode on the terminal and prompt the user to perform related operations;
2) reader operating mode, where the user can view the read external label information, i.e. the RFID application information, in the SD card through the terminal, and start corresponding application;
3) point-to-point operating mode, where the terminal prompts the user about the status of the point-to-point mode, then the user can start or stop corresponding operation and application, etc..

In the embodiment of the present invention, the RFID service program runs on the SD card to reduce the participation of the terminal in control as much as possible. Thus, the RFID service is transmitted in a special physical channel. The display application belongs to general services, and the common transport interface can be used for the display application since leak will not happen as the terminal obtaining information. That is to say, the RFID applications on the SD card are transmitted through different routes.

For ensuring the security of displaying information from the SD card on the terminal, in an embodiment of the present invention, the interface for connecting the SD card and the terminal is an interface supporting the SWP protocol or the S2C protocol.

In related technologies, the SD card usually does not have the display function, and the display function is realized by the application on the terminal. The embodiment of the present invention sets the display application on the SD card, and calls the display resource of the terminal to display, so the terminal plays a role of a display.

In the present embodiment, the RFID application, which is a value-added service set on the SD card according to needs, is added in the SD card to improve the application function of the SD card, and the RFID application information can be displayed on the terminal with display function. Therefore, the problem that the display of RFID application information cannot be used universally is solved, thereby providing possibility for popularization of the SD card.

### Embodiment 1

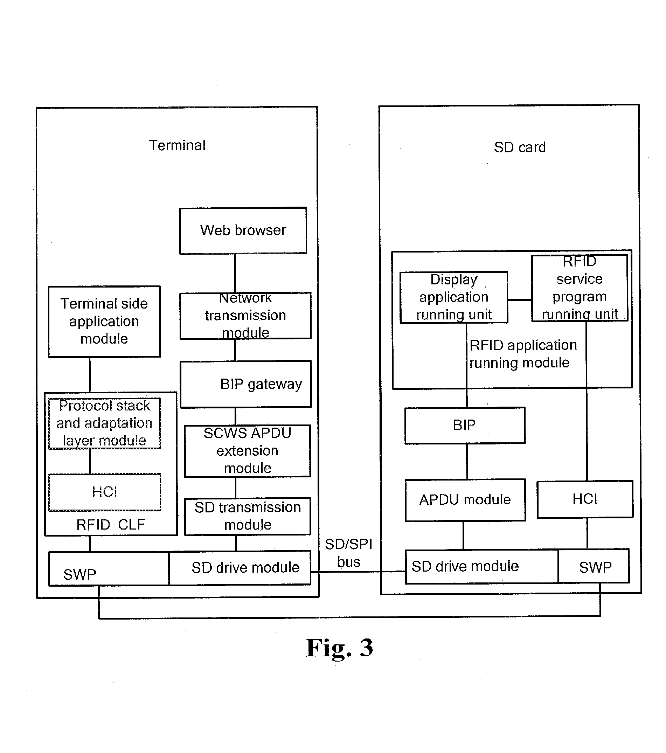

The present embodiment is described by taking completion of the display of the RFID application information based on the SCWS technology for example. Referring to the schematic diagram of connection adopted between the terminal and the SD card shown in Fig. 3, the physical interface adopted by the SD card and the terminal in the present embodiment is a standard SD card interface, for example, the SD/Service Provider Interface (SPI) bus interface.

The terminal in the present embodiment supports the SCWS technology, and can complete the display of the RFID application information of the SD card through the Web browser on the terminal. Except the basic functional modules of a terminal, the terminal further comprises: an SD drive module, an SD transmission module, an SCWS Application Protocol Data Unit (APDU) extension module. Functions of each module for displaying the RFID application information in the terminal are described below.

The Web browser serves as the user interface of the application, and the application in the SD card identified by Uniform Resource Locator (URL) can be triggered by the Web browser. The application can execute a special task, and can also simultaneously create and return content to the Web browser. The page can include an application list, and after opening the Web browser, the user can see all the application information stored in the card by accessing a corresponding page of the SD card. After selecting the hyperlink of a certain application, the user can access the subordinate management page of the application. Possible operations of the application are listed in the subordinate management page, and the user can complete the management operations like application just by continuing to click links on the page.

The network transmission module means the module supporting network communication protocols, that is, the transfer protocols between the application running on the terminal and the BIP gateway, wherein the network communication protocols comprises the Transmission Control Protocol (TCP)/Internet Protocol (IP) protocol stack, the HTTP protocol and so on.

The BIP gateway is a protocol that does not relate to the bearer, and mainly provides various high-speed channels which enable the SD card to access the terminal, that is, realizing communication between the BIP gateway and the SD card via the high-speed channel with the terminal. The communication mode can be classified into client mode and server mode.

The server mode is configured to provide a channel for the Web browser of the terminal to access the Web server in the SD card. The terminal starts up and sends an Open Channel command to the SD card to establish a connection with the server. After that, the server is always in a request monitoring status, and then sends or receives data through a Send Data command/Receive Data command.

The SD card in the present embodiment has no need to support the TCP/IP protocol, and the TCP/IP protocol conversion process is completed by the BIP gateway as a gateway.

The SCWS APDU extension module is configured to support encoding/decoding of the SCWS-related APDU commands and signalling control. The APDU commands in the present embodiment includes but not limited to the following commands:
Open Channel: this command requires the terminal to open a high-speed channel, and the SD card should provide all information necessary to open the channel;
Close Channel: this command requires the terminal to close a designated high-speed channel;
Send Data: this command requires the terminal to send data on the SD card through a designated channel; and
Receive Data: this command requires the terminal to send data of a designated channel to the SD card through a response command.

The SD transmission module is configured to complete the definition of data transmission format of the SD card module and the terminal. The SD card transmission module defines the communication architecture based on the APDU of SD card, which is the communication protocol between the terminal and the SD card, and the APDU is embedded in the communication format.

The SD drive module is configured to control the drive of the SD card. The specific ways of control are different according to different types of the SD card. The SD card supports two modes, namely, SPI bus or SD bus.

Signalling interaction between the terminal and the SD card is based on the APDU message to complete the transmission of related commands, and the APDU message is embedded in the communication format defined by the SD transmission module. The APDU command and response mode are defined in the International Electro-technical Commission (ISO/IEC) 7816-3, and the extension command supporting the SCWS function is defined in the European Telecommunications Standards Institute (ETSI) Telecommunications Service (TS) 102223 release 7.

In the present embodiment, the local host of the SD card is 127.0.0.1, and is used by the HTTP protocol on the terminal to address the BIP gateway. The local host 127.0.0.1 and the specified port 3516 are used for accessing the SCWS. Different applications can use different ports. The present embodiment can adopt a mode of defining port to distinguish an intelligent card from the SD card. For example, the port of the SD card can be defined as 3517, and then the terminal user can access related applications in the SD card only by inputting http://127.0.0.1:3517 on the Web browser.

The SD card responds to the HTTP request of the HTTP application of the Web browser. The HTTP response and request are completed through the BIP gateway between the terminal and the SD card.

The BIP gateway runs in the server mode, and is configured to provide data exchange between the SD card and a main control unit. At the same time, the BIP gateway can also run in the client mode, in which it accesses a remote server by taking the SD card as a client, and supports remote application download.

Except supporting the Web browser, the HTTP protocol, the TCP/IP protocol, the BIP protocol and the APDU protocol, the terminal in the present embodiment is further required to perform corresponding identification and function expansion aiming at the SD card.

The SD card in the present embodiment needs to support the SCWS APDU format, and the following commands are included in the APDU module:
Open Channel: this command requires the terminal to open a high-speed channel, and the SD card should provide all information necessary to open the channel;
Close Channel: this command requires the terminal to close a designated high-speed channel;
Send Data: this command requires the terminal to send data on the SD card through a designated channel;
Receive Data: this command requires the terminal to send data of a designated channel to the SD card through a response command;
Set-up Event List: the SD card provides a series of events, once these events occur, the terminal should inform the SD card immediately, wherein the envelope data available is most frequently used for informing the SD card of the arrival of data from a certain specified channel; and
STATUS: being used for querying status.

The RFID service in the present embodiment is described by taking the 13.56 NFC technology for example. The terminal needs to integrate hardware such as the RFID CLF, the RFID antenna, the secure chip and so on.

For ensuring the security of the RFID service, the RFID CLF communicates with the RFID service through a special physical interface. In the present embodiment, the RFID service adopts the standard Host Controller Interface (HCI)/SWP protocol.

The RFID CLF is used for converting digital signal into radio frequency signal, sending and receiving radio frequency signal through the RFID antenna, and converting radio frequency signal into digital signal to communicate with the RFID application module at the terminal side and the SD card.

In the embodiment of the present invention, the RFID application runs on the SD card, so the SD card comprises the RFID application running module configured for running the RFID application; the RFID application running module further comprises the RFID service program running unit configured for running the RFID service program, and the display application running unit configured for running the RFID display application. The RFID service program indicates completing application of specific RFID functions, for example, the application of transaction by card in the mobile payment. The display application indicates providing value-added services based on the RFID application aiming at the display ability of the terminal, for example, display of transaction record.

The SD card and the RFLD CLF communicate with each other through the SWP/HCI protocol, wherein the SWP is the low-level bearer protocol, referring to ETSI TS_102_613, and the HCl is the control protocol, referring to ETSI TS_102_622.

The terminal also has a terminal side application module for assisting in the completion of the RFID service, the terminal side application module interacts with the RFID CLF through the protocol stack and the adaptation layer module.

The terminal side application module mainly comprises the following functions: facilitating the user to complete the triggering and conversion of operating modes of modules;
in the card simulation operating mode, the terminal can display related information of the mode, and prompt the user to perform related operations, etc.;
in the reader operating mode, the user can view the read external label information, and start the corresponding application, etc.; and
in the point-to-point operating mode, the terminal prompts the user about status of the point-to-point mode, then the user can start or stop the corresponding operation and application, etc..

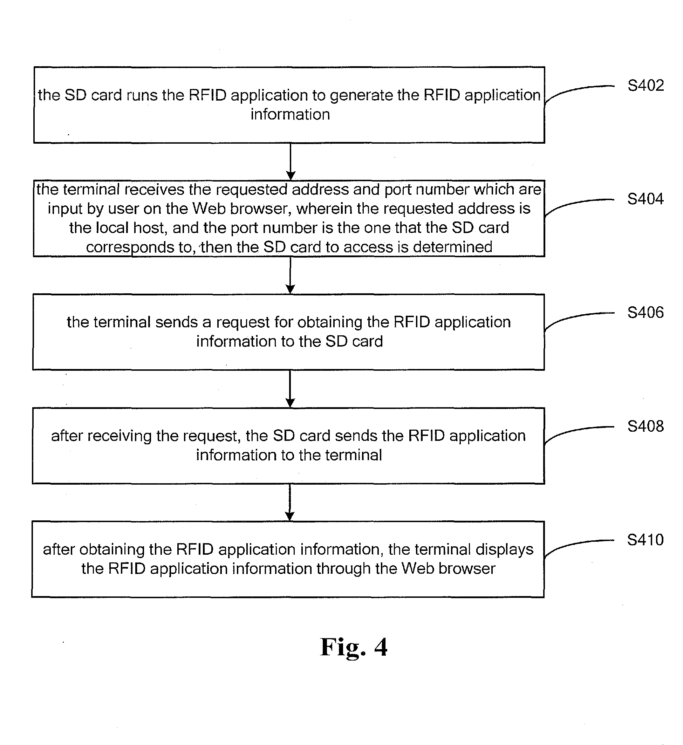

Fig. 4 shows a flowchart of a method for displaying RFID application information by the SCWS technology of the present embodiment, the method is described by taking implementation of which on the structure shown in Fig. 3 for example. The method comprises the following steps.

Step S402: the SD card running the RFID application to generate the RFID application information, wherein the RFID application comprises: the RFID service program and the display application.

After establishing a connection with the terminal, the SD card opens related channels through the APDU command.
Step S404: the terminal receiving requested address and port number which are input by user on the Web browser, wherein the requested address is the local host, and the port number is the one that the SD card corresponds to, i.e. http://127.0.0.1:3517 in the embodiment, then the SD card to be accessed is determined.
Step S406: the terminal sending a request for obtaining the RFID application information to the SD card. In the present embodiment, the request can be sent, according to the mode of the HTTP protocol, to the SD card by the network transmission module through the BIP gateway, the SCWS APDU extension module, the SD transmission module and the SD drive module.
Step S408: after receiving the request, the SD card sending the RFID application information to the terminal.
Step S410: after obtaining the RFID application information, the terminal displaying the RFID application information through the Web browser.

The terminal in the present embodiment accesses the SD card in the mode of taking the SD card as the Web server, and can display the RFID application information on the SD card to the user in the mode of the Web browser, so the terminal can access the RFID application information on the SD card just by supporting an Internet access function, which solves the problem that the display of the RFID application information on the SD card cannot be used universally, enlarges the application scope of the SD card and reduces the consumption of hardware resource.

### Embodiment 2

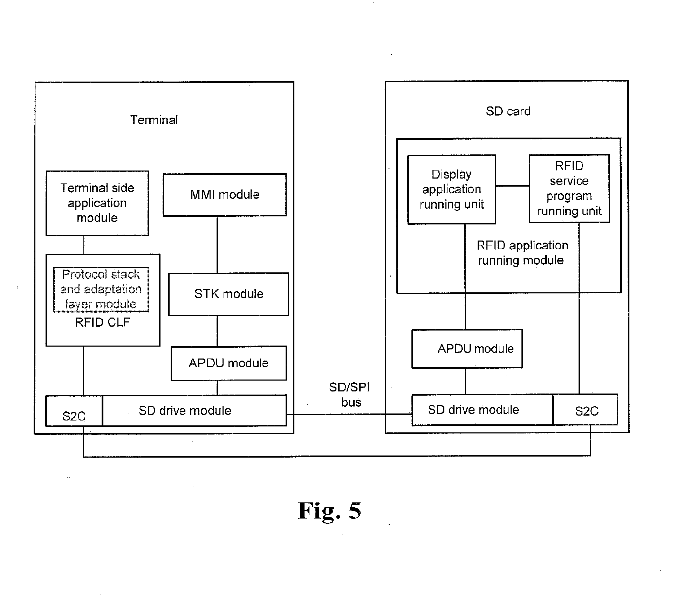

In the present embodiment, the display of the RFID application information is implemented through the STK technology. Referring to the schematic diagram of connection adopted between the terminal and the SD card shown in Fig. 5, in the present embodiment, by supporting the STK mode, the terminal can analyze/distinguish initiative commands and call the display resource of the terminal to complete the display and interaction of the STK.

The RFID application display part of the terminal in the embodiment comprises: an APDU module, an SD card drive module, an STK module and a MMI module, wherein the functions of each module are described below.

The SD card drive module is the physical interface for the connection between the terminal and the SD card, and is realized by adopting the standard SD card interface, for example, the SD/SPI bus interface.

The APDU module is configured to complete transmission of related commands in the process of signalling interaction between the terminal and the SD card, and embedding the APDU message in the communication format. The APDU command and response mode are defined in the ISO/IEC 7816-3. At the same time, the APDU module has the function of distinguishing the SD APDU instruction from the SIM card instruction.

The STK module is configured to complete analysis of initiative commands of the STK menu, and for the specific instruction, the standards such as protocol Global System for Mobile Communication (GSM) 11.11\GSM 11.14 can be referred to.

The MMI module is configured to receive the display and interaction request on the SD card sent from the STK module, and complete the corresponding display and interaction according to the request on the SD card.

The SD card in the present embodiment is required to support the APDU and SD card drive. The physical layer communication between the terminal and the display application on the SD card adopts the drive of the traditional SD card. The specific drive modes of the SD card are different according to different types thereof. The SD card supports two modes, namely, the SPI bus or the SD bus.

The RFID service in the present embodiment is described by taking the 13.56M NFC technology for example. The terminal needs to integrate hardware, such as the RFID CLF, the RFID antenna, the secure chip and so on.

The RFID CLF is used for converting digital signal into radio frequency signal, sending and receiving the radio frequency signal through the RFID antenna, and converting radio frequency signal into digital signal to communicate with the terminal side RFID application module and the SD card.

For ensuring the security of RFID service, the RFID CLF communicates with the RFID service through a special physical interface. In the present embodiment, the RFID service adopts the S2C protocol. The S2C is a secure encrypted protection interface aiming at wireless inductive transmission of the near field communication. This technology mainly prevents illegal user from intercepting and stealing transmitted information in the induction process of the RFID and the RFID device (i.e. RFID card reader, memory access).

The terminal side application module is configured to assist in the completion of the RFID service, and interact with the RFID CLF through the protocol stack and the adaptation layer module.

The terminal side application module mainly comprises the following functions: facilitating the user to complete triggering and conversion of operating modes of modules;
in the card simulation operating mode, the terminal can display related information of the mode, and prompt user to perform related operations, etc.;
in the reader operating mode, the user can view the read external label information, and start the corresponding application, etc.; and
in the point-to-point operating mode, the terminal prompts the user about status of the point-to-point mode, then the user can start or stop the corresponding operation and application, etc..

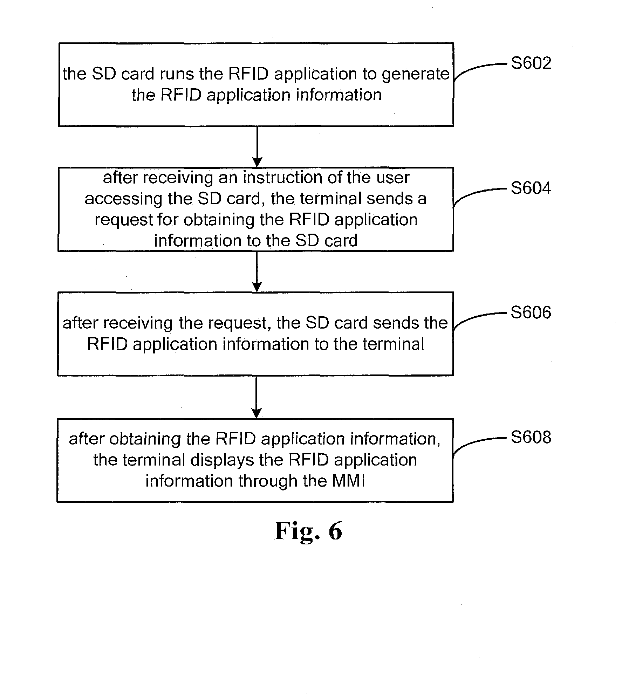

Fig. 6 shows a flowchart of a method for displaying RFID application information by the STK technology of the present embodiment, the method is described by taking realizing the method on the structure shown in Fig. 5 for example, wherein, the method comprises the following steps.
Step S602: the SD card running the RFID application to generate the RFID application information, wherein the RFID application comprises: the RFID service program and the display application.
Step S604: after receiving an instruction of the user accessing the SD card, the terminal sending a request for obtaining the RFID application information to the SD card. In the present embodiment, the request can be sent to the SD card through the STK module, the APDU module and the SD drive module.
Step S606: after receiving the request, the SD card sending the RFID application information to the terminal.
Step S608: after obtaining the RFID application information, the terminal displaying the RFID application information through the MMI.

The terminal in the present embodiment accesses the SD card through the STK technology, and can display the RFID application information on the SD card to the user in the mode of the STK, so the terminal can access the RFID application information on the SD card just by supporting the STK, which solves the problem that the RFID application information running on the SD card cannot be displayed, enlarges the application scope of the SD card and reduces the consumption of hardware resource.

### Embodiment 3

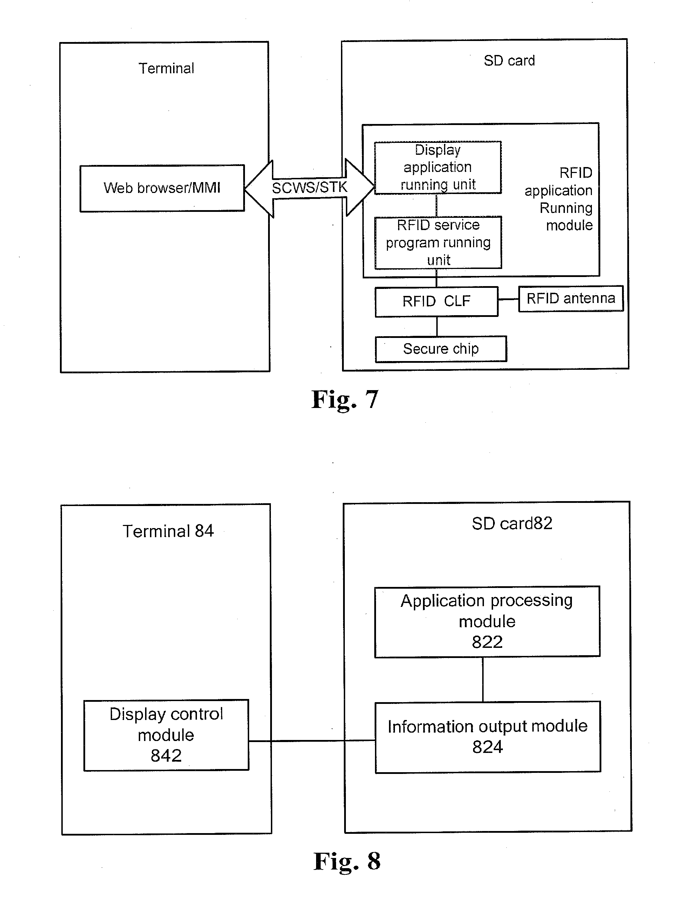

In the present embodiment, the method for displaying the RFID application information is described by taking the 2.4G SD card for example. Referring to Fig. 7, the difference between the present embodiment and the above-mentioned two embodiments is that: the RFID CLF and the RFID antenna in the present embodiment are integrated on the SD card, and the RFID antenna adopts the 2.4G technology.

In the meantime, the interface between the RFID CLF and the secure chip is an internal interface of the SD card. In the present embodiment, the RFID application runs on the SD card, and at least comprises the RFID service and the display application.

In the present embodiment, the display of the RFID application information can be realized by the SCWS/STK technology and the like in the above-mentioned embodiments. The display application on the SD card sends the display and interaction request to the terminal, and then the terminal calls related resource to complete the display and interaction of the RFID application according to the request on the SD card.

The display application on the SD card in the present embodiment adopts the drive control of the traditional SD card. The specific modes of the drive control of the SD card are different according to different types thereof. The SD card supports two modes, namely, the SPI bus or the SD bus.

In the mode supporting the SCWS, the Web browser of the terminal serves as the user interface of application, and the application identified by the URL in the SD card can be triggered by the Web browser. The RFID application can execute a special task, and can also simultaneously create and return content to the Web browser. The page of the Web browser includes an application list, and after opening the Web browser, the user can see all the application information stored in the card by accessing the page.

The SD card application can interact with the client HTTP application running on the terminal, and return related xHTML page according to the HTTP application request.

In the mode supporting the STK, the terminal can analyze/discriminately initiative commands and call the display resource of the terminal to complete the display and interaction of the STK.

The SD card in the present embodiment is specifically the 2.4G SD card. After connecting with the terminal, the SD card can adopt the modes in the embodiment 1 or the embodiment 2 to complete the display of the RFID application information, which solves the problem that the RFID application information running on the SD card cannot be displayed, enlarges the application scope of the SD card and reduces the consumption of hardware resource.

Fig. 8 shows a structural block diagram of a system for displaying RFID application information according to an embodiment of the present invention, wherein the system comprises: an SD card 82 and a terminal 84.

The SD card 82 comprises: an application process module 822, which is configured to run a RFID application to generate RFID application information, wherein the RFID application comprises a RFID service program and a display application; an information output module 824, which is configured to upload the RFID application information obtained by the application process module 822 to the terminal 84.

The terminal 84 comprises: a display control module 842, which is configured to display the RFID application information according to the mode of communication with the SD card 82.

There are two modes of communication between the SD card 82 and the terminal 84 in the embodiment of the invention, one is the communication based on the STK technology, and the other is the communication based on the Web server. The former is called the STK technology, and the latter is called the SCWS technology. According to the two communication modes, the terminal 84 can adopt two different modes to display the RFID application information. The terminal in the second mode displays the RFID application information in the form of a webpage, so it is required to support the Web browser, the HTTP protocol, the TCP/IP protocol, the BIP protocol and so on.

According to the above-mentioned two communication modes, the display control module 842 comprises: a first display unit, which is configured to display the RFID application information in a display mode supported by the STK when the mode of communication with the SD card is based on the STK technology.

Or, the display control module 842 comprises: a second display unit, which is configured to display the RFID application information in a display mode of the Web browser when the mode of communication with the SD card is based on the Web server.

In the meantime, the terminal 84 further comprises: a request sending module, which is configured to send a request for obtaining the RFID application information to the SD card 82 according to the mode of the HTTP protocol.

For the first communication mode, when the user selects the STK menu, the display application on the SD card is run to communicate with the terminal through the ISO7816 interface.

For the second communication mode, e.g. accessing in the mode of the Web server, the condition of triggering the running of the RFID application can be that: the SD card receives the request, sent from the terminal, for obtaining the RFID application information to trigger, wherein the request is sent by the terminal according to the mode of the HTTP protocol. At this time, the application process module 822 comprises: a triggering unit, which is configured to trigger running of its own RFID application after receiving the request sent from the terminal 84.

When the terminal supports the STK mode, the STK includes a group of instructions which is set as interaction between the terminal and the SD card, and then the SD card is enabled to run the RFID application in the card, thereby realizing specified value-added services. The terminal calls the MMI through the STK to complete corresponding display and interaction. The MMI is an interface between the user performing the mobile communication and the terminal providing the mobile communication service, and comprises hardware and software.

When the terminal supports the SCWS mode, a local connection is established between the Web browser on the terminal and the Web server running on the SD card in the SCWS mode. The Web server is embedded in the SD card, and the application of the terminal can access resources and services on the SD card through the HTTP protocol. Due to using the HTTP protocol to exchange data, the Web browser can be used as a user interface of the application.

When the SD card communicates with the terminal in the mode of the Web server, for ensuring that the terminal is able to access the SD card, the terminal can set the address of the SD card as local host, and set the port of the SD card as designated port. Thus, the terminal can access the SD card in the mode of surfing the Internet, only by inputting the local host and the designated port on the browser interface of the terminal, to complete display of the RFID application information on the SD card.

The terminal in the present embodiment can be either a mobile terminal, or other control devices which are connected with and used for controlling the SD card, such as a laptop with an SD card slot and a PDA with an SD card slot.

The terminal in the present embodiment means one with the RFID function which not only comprises the above-mentioned modules, but also can comprise the RFID CLF, the RFID antenna, the secure chip and so on. The RFID CLF and RFID antenna can be integrated either on the terminal, or on the SD card.

The SD card needs to support a CPU or a processor to implement corresponding processing function, so the SD card is added with an application processor, i.e. the above-mentioned application process module 822, so as to realize the SCWS/STK function.

The above-mentioned RFID application runs on the SD card, and at least comprises the RFID service and display applications. The RFID service program indicates completing application of specific RFID functions, for example, the application of transaction by card in the mobile payment. The display application indicates providing value-added services based on the RFID application aiming at display ability of the terminal, for example, display of transaction record.

For ensuring the security of displaying information of the SD card on the terminal, the information output module 824 comprises: a first information output unit, which is configured to upload the RFID application information generated by the RFID service program to the terminal 84 through a designated physical channel; a second information output unit, which is configured to upload the RFID application information generated by the RFID display application to the terminal through a common transmission interface. In the embodiment of the present invention, the interface for connecting the second information output unit and the terminal is the SWP or the interface supporting the S2C.

In the embodiment, the RFID application, which is a value-added service set on the SD card according to needs, is added in the SD card to improve the application function of the SD card, and the RFID application information can be displayed on the terminal with display function. Therefore, the problem that the display of RFID application information cannot be used universally is solved, thereby providing possibility for popularization of the SD card.

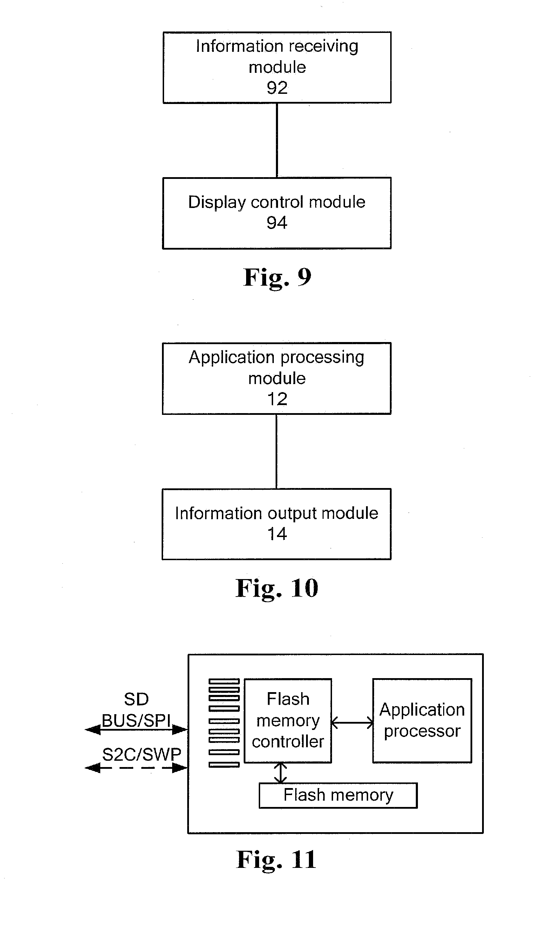

Fig. 9 shows a terminal according to an embodiment of the present invention, wherein the terminal comprises:
an information receiving module 92, which is configured to receive RFID application information sent from an SD card;
a display control module 94, which is configured to display the RFID application information received by the information receiving module 92 according to the mode of communication with the SD card.

There are two modes of communication between the SD card and the terminal in the embodiment of the invention, one is the communication based on the SIM, and the other is the communication based on the Web browser. The former is called the STK technology, and the latter is called the SCWS technology. According to the two communication modes, the terminal can adopt two different modes to display the RFID application information. The terminal in the second mode displays the RFID application information in the form of a webpage, so it is required to support the Web browser, the HTTP protocol, the TCP/IP protocol, the BIP protocol and so on.

Preferably, the display control module 94 comprises: a first mode determining unit, which is configured to determine the mode of communication with the SD card is the STK technology; a first display unit, which is configured to display the RFID application information in a display mode supported by the STK according to the determining result of the first mode determining unit.

Or, the display control module 94 comprises: a second mode determining unit, which is configured to determine the mode of communication with the SD card is based on the Web server; a second display unit, which is configured to display the RFID application information in a display mode of Web browser according to the determining result of the second mode determining unit. In this situation, the terminal further comprises: a request sending module, which is configured to send a request for obtaining the RFID application information to the SD card according to the mode of HTTP protocol, so as to trigger the SD card to run the RFID application.

The terminal in the present embodiment can be either a mobile terminal, or other control devices which are connected with and used for controlling the SD card, such as a laptop with a SD card slot and a PDA with a SD card slot. That is to say, the terminal is one of mobile terminal, portable computer or PDA.

For ensuring the security of RFID service, the terminal communicates with the SD card through a designated physical interface. The designated physical interface can be either a standard protocol interface, e.g. SWP, or a private communication interface, e.g. S2C.

The terminal may need to be integrated with hardware such as the RFLD CLF, the RFID antenna, the secure chip and so on. Furthermore, it is needed to add an application at the terminal side to assist in completion of the RFID service.

The physical layer communication between the terminal and the display application on the SD card adopts the drive of the traditional SD card. The specific drive modes of the SD card are different according to different types thereof. The SD card supports two modes, namely, the SPI bus or the SD bus.

The terminal of the present embodiment displays the RFID application information according to the access mode of the SD card, thereby improving the application function of the SD card, solving the problem that the RFID application running on the SD card cannot be displayed, and providing possibility for popularization of the SD card.

Fig. 10 shows an SD card according to an embodiment of the present invention, wherein the SD card comprises: an application process module 12, which is configured to run a RFID application to generate RFID application information, wherein the RFID application comprises a RFID service program and a display application; an information output module 14, which is configured to upload the RFID application information obtained by the application process module 12 to a terminal.

There are two communication modes between the SD card and the terminal in the embodiment of the invention, one is based on the SIM, and the other is based on the Web browser. The former is called the STK technology, and the latter is called the SCWS technology. According to the two communication modes, the terminal adopts two different modes to display the RFID application information.

During specific implementation process, for supporting the CPU or processor to implement corresponding processing function, the SD card is added with an application processor to realize the SCWS/STK function, and the hardware connection of the SD card is as shown in Fig. 11. The SD card comprises a flash memory controller (serving as the information output module 14), a flash memory and an application processor, wherein the flash memory controller and the flash memory serve as the information output module 14, and the application processor serves as the application process module 12.

In the present embodiment, the RFID application runs on the SD card, and at least comprises the RFID service program and the display application.

For ensuring the security of RFID service, the information output module 14 comprises: a first information output unit, which is configured to upload the RFID application information generated by the RFID service program to the terminal through a designated physical channel; a second information output unit, which is configured to upload the RFID application information generated by the RFID display application to the terminal through a common transmission interface. The second information output unit communicates with the terminal through a special physical interface. The specified physical interface can be either a standard protocol interface, e.g. SWP, or a private communication interface, e.g. S2C.

The display application can be realized through the SCWS/STK technology and the like. The SD card sends the display and interaction request to the terminal, then according to the request from the SD card, the terminal calls related resource to complete the display and interaction of the RFID application information.

For supporting the SCWS function, the SD card is required to support the protocols such as the BIP, the APDU and so on.

The physical layer communication between the terminal and the display application on the SD card adopts the drive of the traditional SD card. The specific drive modes of the SD card are different according to different types thereof. The SD card supports two modes, namely, the SPI bus or the SD bus.

The present embodiment sets a RFID application in the SD card, and when displaying the RFID application information, the SD card is used as the SIM card or the Web server. The SD card uploads the RFID application information to the terminal to further complete the display of the information. Thus, the universality of the SD card is improved, and the consumption of hardware resource is reduced, and at the same time, it is convenient for the user to use.

It can be seen from the description above that the present invention realizes the following technical effects: the terminal is enabled to display the RFID application information on the SD card by setting the RFID application in the SD card and using the SD card as the SIM card or the Web server during the display of the RFID application information. The universality of the SD card is improved, and the consumption of hardware resource is reduced, at the same time, it is convenient for user to use.

Apparently, those skilled in the art shall understand that the above-mentioned modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, or they are made into integrated circuit module respectively, or a plurality of modules or steps thereof are made into one integrated circuit module. Thus, the present invention is not limited to the combination of any specific hardware and software.

Above description is only to illustrate the preferred embodiments but not to limit the present invention. Various alterations and changes to the present invention are apparent to those skilled in the art. The scope defined in claims shall comprise any modification, equivalent substitution and improvement within the spirit and principle of the present invention.

## Claims

1. A method for displaying Radio Frequency Identification (RFID) application information, **characterized in that** the method comprises:
a Secure Digital Memory Card (SD card) running a RFID application to generate RFID application information, wherein the RFID application comprises a RFID service program and a display application;
the SD card uploading the RFID application information to a terminal; and
the terminal displaying the RFID application information according to the mode of communication with the SD card.

2. The method according to claim 1, **characterized in that** when the mode of communication adopted between the terminal and the SD card is based on SIM Tool Kit (STK) technology,
the terminal displaying the RFID application information according to the mode of communication with the SD card comprises: the terminal displaying the RFID application information in a display mode supported by the STK.

3. The method according to claim 1, **characterized in that** when the mode of communication between the terminal and the SD card is based on Web server,
the terminal displaying the RFID application information according to the mode of communication with the SD card comprises: the terminal displaying the RFID application information in a display mode of Web browser.

4. The method according to claim 3, **characterized in that** the condition of triggering the running of the RFID application on the SD card comprises: the SD card receiving a request sent from the terminal for obtaining the RFID application information, wherein the request is sent according to the mode of Hyper Text Transfer Protocol (HTTP) protocol.

5. The method according to claim 3, **characterized in that** the terminal displaying the RFID application information in the display mode of Web browser comprises:
setting the address of the Web browser as a local host, and setting the port as a designated port when the terminal displays the RFID application information.

6. The method according to any one of claims 1 to 5, **characterized in that** the SD card uploading the RFID application information to the terminal comprises:
the SD card uploading RFID application information generated by the RFID service program to the terminal through a designated physical channel; and
the SD card uploading RFID application information generated by the RFID display application to the terminal through a common transmission interface.

7. A system for displaying Radio Frequency Identification (RFID) application information, **characterized in that** the system comprises: a terminal and a Secure Digital Memory Card (SD card), wherein
the SD card comprises:
an application processing module, which is configured to run a RFID application to generate RFID application information, wherein the RFID application comprises a RFID service program and a display application; and
an information output module, which is configured to upload the RFID application information to the terminal;
the terminal comprises:
a display control module, which is configured to display the RFID application information according to the mode of communication with the SD card.

8. The system according to claim 7, **characterized in that** the display control module comprises:
a first display unit, which is configured to display the RFID application information in a display mode supported by SIM Tool Kit (STK) when the mode of communication with the SD card is based on the STK technology.

9. The system according to claim 7, **characterized in that** the display control module comprises:
a second display unit, which is configured to display the RFID application information in a display mode of Web browser when the mode of communication with the SD card is based on Web server.

10. The system according to claim 9, **characterized in that**,
the terminal further comprises: a request sending module, which is configured to send a request for obtaining the RFID application information to the SD card according to the mode of HTTP protocol; and
the application processing module comprises: a triggering unit, which is configured to trigger running of its own RFID application after receiving the request sent from the terminal.

11. The system according to claim 7, **characterized in that** the information output module comprises:
a first information output unit, which is configured to upload the RFID application information generated by the RFID service program to the terminal through a designated physical channel; and
a second information output unit, which is configured to upload the RFID application information generated by the RFID display application to the terminal through a common transmission interface.

12. A terminal, **characterized in that** the terminal comprises:
an information receiving module, which is configured to receive Radio Frequency Identification (RFID) application information sent from a Secure Digital Memory Card (SD) card; and
a display control module, which is configured to display the RFID application information according to the mode of communication with the SD card.

13. The terminal according to claim 12, **characterized in that** the display control module comprises:
a first mode determining unit, which is configured to determine the mode of communication with the SD card is based on SIM Tool Kit (STK) technology; and
a first display unit, which is configured to display the RFID application information in a display mode supported by STK according to the determining result of the first mode determining unit.

14. The terminal according to claim 12, **characterized in that** the display control module comprises:
a second mode determining unit, which is configured to determine the mode of communication with the SD card is based on Web server; and
a second display unit, which is configured to display the RFID application information in a display mode of Web browser according to the determining result of the second mode determining unit.

15. The terminal according to claim 14, **characterized in that** further comprising a request sending module, which is configured to send a request for obtaining the RFID application information to the SD card according to the mode of HTTP protocol, so as to trigger the SD card to run the RFID application, wherein the RFID application comprises: a RFID service program and a display application.

16. The terminal according to any one of claims 12 to 15, **characterized in that** the terminal is one of a mobile terminal, a portable computer or a Personal Digital Assistant (PDA).

17. A Secure Digital Memory Card (SD) card, **characterized in that** the SD card comprises:
an application processing module, which is configured to run a Radio Frequency Identification (RFID) application to generate RFID application information, wherein the RFID application comprises a RFID service program and a display application; and
an information output module, which is configured to upload the RFID application information obtained by the application processing module to a terminal.

18. The SD card according to claim 17, **characterized in that** the information output module comprises:
a first information output unit, which is configured to upload the RFID application information generated by the RFID service program to the terminal through a designated physical channel; and
a second information output unit, which is configured to upload the RFID application information generated by the RFID display application to the terminal through a common transmission interface.
